# EUROPEAN PATENT APPLICATION

(11) **EP 4 730 644 A1**
(43) Date of publication of application: **22.04.2026**
(21) Application number: 24823619.2
(22) Date of filing: 03.06.2024
(51) Int. Cl.: H02S 30/20, H02S 40/32

(54) **THREE-DIMENSIONAL FOLDABLE PHOTOVOLTAIC MODULE**

(30) Priority: 15.06.2023 KR 20230076598; 20.05.2024 KR 20240065092
(71) Applicant: SOFTPV Inc., Hwaseong-si, Gyeonggi-do 13215 (KR)
(72) Inventor: LEE, Sung Gue, Hwaseong-si, Gyeonggi-do 18497 (KR); AHN, Hyeon Woo, Seongnam-si, Gyeonggi-do 13646 (KR)
(74) Representative: Ter Meer Steinmeister & Partner
(86) International application number: PCT/KR2024/007597
(87) International publication number: WO 2024/258099

(57) **Abstract**

A three-dimensional foldable photovoltaic module is disclosed. The three-dimensional foldable photovoltaic module of the present disclosure can be installed at a desired location without a spatial restriction to generate energy using sunlight. Therefore, the present disclosure can enable efficient photovoltaic power generation without being limited by space.

## Description

### Technical Field

The present disclosure relates to a three-dimensional foldable photovoltaic module.

In particular, the present disclosure relates to a three-dimensional foldable photovoltaic module capable of photovoltaic power generation at a desired location without a spatial restriction.

### Background Art

Photovoltaic power generation, which produces energy using sunlight, is attracting attention as a renewable energy source as environmental issues become more prominent. Accordingly, each country is currently trying to change its energy production system to an eco-friendly energy production system.

However, photovoltaic power generation systems have unsolved problems. First, they require a large area, and second, they should be exposed to the outside.

It is true that producing energy using sunlight is not as efficient as conventional energy production methods. Therefore, in order to produce usable energy, a large number of panels are required, and for this reason, panels should be located in parallel over a large area. Therefore, photovoltaic power generation systems are being installed in areas other than urban areas with low population density.

In addition, since photovoltaic power generation requires exposure to light, panels should be exposed outdoors to face the sky. Thus, photovoltaic power generation systems have significant limitations in installation.

Due to these two major problems, photovoltaic power generation systems have limited usability. Accordingly, photovoltaic power generation systems have remained at essentially the same stage as when they were first invented.

### DISCLOSURE

### Technical Problem

The present disclosure has been made to solve the above-described problems, and an object of the present disclosure is to provide a three-dimensional foldable photovoltaic module with high usability. For example, the present disclosure aims to provide a three-dimensional foldable photovoltaic module that can generate photovoltaic power anywhere without a spatial restriction.

### Technical Solution

A three-dimensional foldable photovoltaic module according to an embodiment may comprise: a frame unit formed with an installation space; and a photovoltaic power generation unit disposed in a form that closes the installation space, and generating energy using sunlight supplied through the installation space.

The frame unit may be formed as supports disposed in a horizontal or vertical direction are connected.

At least two supports may be disposed in a vertical direction to form an installation space therebetween, and the photovoltaic power generation unit may be disposed in the installation space and is connected to the supports.

Four supports may be disposed to be spaced apart from each other, and the photovoltaic power generation unit may be disposed to be in contact with at least two of the four supports and to close the installation space.

Folding units may be formed on one sides of the supports to allow the supports to be folded.

The folding units may be formed in symmetrical shapes at symmetrical positions on the supports.

The photovoltaic power generation unit may comprise a plate on which circuit patterns are formed and particles that are disposed on the plate and generate energy when sunlight radiates.

The plate may be fixed to the supports and may be connected to the supports through movable connectors capable of sliding movement.

The movable connector may include a first fixing member that covers the support and a second fixing member that covers the support at a position symmetrical to the position of the first fixing member, and the first fixing member and the second fixing member may be fixed to or released from the support by being moved close to or away from the surface of the support to be slidably movable.

The inside of the support may be formed with a space.

A reflection unit that reflects sunlight may be disposed in the frame unit.

A folding unit may be disposed in the photovoltaic power generation unit to allow the photovoltaic power generation unit to be folded.

The three-dimensional foldable photovoltaic module may comprise an incidence unit, photovoltaic power generation units may be disposed to be spaced apart from each other, and the incidence unit may be disposed in a form that closes a space through which the photovoltaic power generation units are spaced apart from each other.

A folding unit may be disposed at a location where the photovoltaic power generation unit and the incident unit come into contact.

The support may form the line of a figure of a set shape by being disposed in at least one direction of a horizontal direction and a vertical direction, and the photovoltaic power generation unit may be disposed on the surface of the figure of the set shape.

### Advantageous Effects

According to the embodiments of the present disclosure, it is possible to provide a three-dimensional foldable photovoltaic module with high usability. For example, the three-dimensional foldable photovoltaic module according to the embodiments of the present disclosure may be disposed at a location desired by a user, rather than in a special space, such as when going camping, on a shelf at the roof of a building or at a location adjacent to an indoor window.

### Brief Description of Drawings

Fig. 1 illustrates a photovoltaic power generation unit of a three-dimensional foldable photovoltaic module according to an embodiment of the present disclosure.
Fig. 2 illustrates a three-dimensional foldable photovoltaic module according to a first embodiment of the present disclosure.
Fig. 3 illustrates a three-dimensional foldable photovoltaic module according to a second embodiment of the present disclosure.
Fig. 4 illustrates a three-dimensional foldable photovoltaic module according to a third embodiment of the present disclosure.
Fig. 5 sequentially illustrates the folding process of the three-dimensional foldable photovoltaic module according to the third embodiment of the present disclosure.
Fig. 6 illustrates a three-dimensional foldable photovoltaic module according to a fourth embodiment of the present disclosure.
Fig. 7 illustrates a cross-section of a support according to an embodiment of the present disclosure.
Fig. 8 illustrates a cross-section of a support according to another embodiment of the present disclosure.
Fig. 9 illustrates a three-dimensional foldable photovoltaic module according to a fifth embodiment of the present disclosure.
Fig. 10 illustrates a three-dimensional foldable photovoltaic module according to a sixth embodiment of the present disclosure.
Fig. 11 illustrates a three-dimensional foldable photovoltaic module according to a seventh embodiment of the present disclosure.
Fig. 12 shows an example in which the three-dimensional foldable photovoltaic modules of Fig. 10 and Fig. 11 are disposed.

### Mode for Invention

The present disclosure may be modified in various ways and has various embodiments, and particular embodiments are illustrated in the drawings and will be described in detail in the detailed description. It should be understood, however, that the present disclosure is not intended to be limited to the particular embodiments but includes all modifications, equivalents and alternatives falling within the spirit and scope of the present disclosure.

The terms used in the present disclosure are used only to describe particular embodiments and are not intended to limit the present disclosure. Singular expressions include plural expressions, unless the context clearly indicates otherwise. It will be further understood that the terms "include," "have" and the like used herein are to specify the presence of features, numbers, steps, operations, elements, parts or combinations thereof stated herein, but do not preclude in advance the possibility of the presence or addition of one or more other features, numbers, steps, operations, elements, parts or combinations thereof.

Hereinafter, preferred embodiments of the present disclosure will be described in detail with reference to the attached drawings. It should be noted that, in the attached drawings, the same components are represented by the same symbols wherever possible. In addition, detailed descriptions of known functions and configurations that may obscure the gist of the present disclosure will be omitted. For the same reason, some components in the attached drawings are exaggerated, omitted or schematically illustrated.

A three-dimensional foldable photovoltaic module according to an embodiment of the present disclosure may be installed without being limited in space. This is possible due to a photovoltaic power generation unit of the present disclosure. Therefore, the photovoltaic power generation unit according to an embodiment of the present disclosure will be described first.

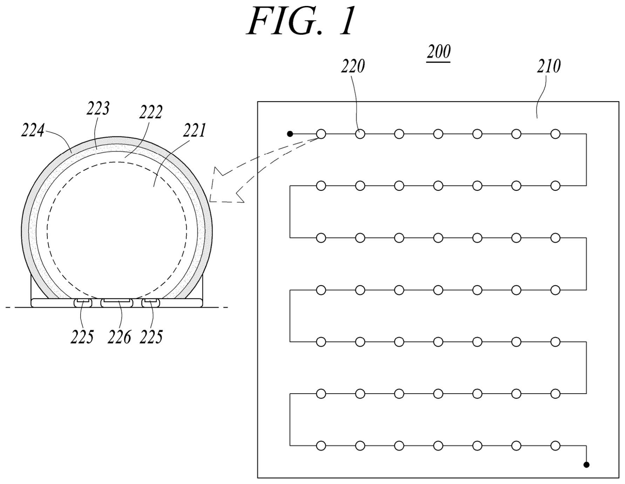

Fig. 1 illustrates a photovoltaic power generation unit of a three-dimensional foldable photovoltaic module according to an embodiment of the present disclosure.

In the present disclosure, a photovoltaic power generation unit 200 is formed in a shape in which particles 220 are disposed on a plate 210 as illustrated in Fig. 1. As illustrated in Fig. 1, the particle 220 may have the shape of a spherical particle 220 that cannot be seen with the naked eye (Of course, the cross-section is circular). Therefore, sunlight radiated toward the photovoltaic power generation unit 200 may pass through the plate 210. Therefore, the present disclosure may perform photovoltaic power generation even when the photovoltaic power generation unit 200 is disposed in the form of a stack.

The photovoltaic power generation unit 200 according to the embodiment of the present disclosure may be composed of the plate 210 and the particles 220.

The plate 210 may be made of a flexible material, and may be formed into a specific shape. The plate 210 may be transparent or opaque. However, it is preferable that the plate 210 be made of a material or substance through which sunlight may pass.

Circuit patterns may be printed on the plate 210. The circuit patterns may be printed on one surface of the plate 210 and be connected in series or in parallel (Fig. 1 illustrates that circuit patterns are connected in series on the plate 210).

The particle 220 may include a first electrode layer 221, a second electrode layer 222, a passivation layer 223, a prevention layer 224, a first connection part 225, and a second connection part 226.

The particle 220 is formed into a sphere with its bottom flattened. That is to say, the particle 220 may be formed into a spherical shape as different components are connected. The particle 220 may be disposed in a shape in which the second electrode layer 222 is disposed inside the first electrode layer 221. The first electrode layer 221 and the second electrode layer 222 may be formed in shapes in which the lower portions thereof are cut in a horizontal direction. The second electrode layer 222 may be disposed inside the first electrode layer 221. The first electrode layer 221 and the second electrode layer 222 may be different types of silicon.

For example, the first electrode layer 221 may be N-type silicon, and the second electrode layer 222 may be P-type silicon. Therefore, when sunlight reaches the particle 220, energy may be generated by the movement of electrons and holes.

When the first electrode layer 221 is N-type silicon and the second electrode layer 222 is P-type silicon, electrons and holes accumulate at the first connection part 225 connected to the lower side of the first electrode layer 221 and the second connection part 226 disposed at the lower side of the second electrode layer 222, respectively, and due to this, electricity may flow through the circuit patterns of the plate 210.

The passivation layer 223 for smooth transmission of electrons and holes may be disposed on the outer side of the first electrode layer 221. The prevention layer 224 may be disposed to surround the passivation layer 223 so as to prevent reflection of sunlight.

In this way, in the present disclosure, the particles 220 that cannot be seen with the naked eye may produce energy. The energy (electrical energy) generated by each of the particles 220 may be very small, but when the energy generated by the particles 200 is added together, it is possible to generate a significantly large amount of energy compared to the cells of conventional photovoltaic power generation systems.

In addition, in the present disclosure, because the circuit patterns are printed on the plate 210 and the particles 220 are disposed on the circuit patterns, the circuit patterns may be formed in various shapes and the spacing between the particles 220 may also be adjusted.

The first connection part 225 and the second connection part 226 may be disposed in the particle 220. The first connection part 225 may be connected to the first electrode layer 221, and the second connection part 226 may be connected to the second electrode layer 222. The first connection part 225 may be a positive (+) electrode or a negative (-) electrode depending on the types of the first electrode layer 221 and the second electrode layer 222, and the second connection part 226 may be an opposite electrode.

In this way, the photovoltaic power generation unit 200 of the present disclosure has the characteristics that, since the size of the particle 220 is small, a space is formed between the particles 220 to render permeability and significantly high usability is provided due to the flexible plate 210.

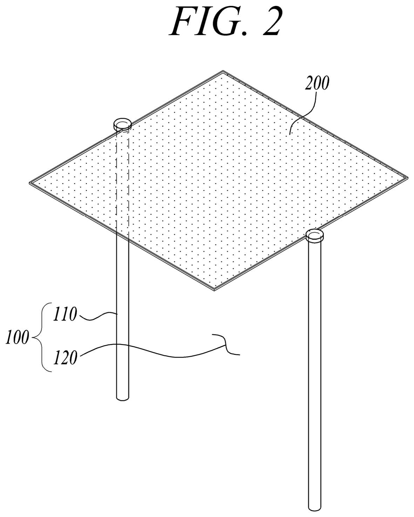

Fig. 2 illustrates a three-dimensional foldable photovoltaic module according to a first embodiment of the present disclosure.

According to the first embodiment of the present disclosure, the three-dimensional foldable photovoltaic module may include a frame unit 100 and a photovoltaic power generation unit 200.

The frame unit 100 may refer to a skeleton on which the photovoltaic power generation unit 200 is disposed. The frame unit 100 may include a support 110. At least two supports 110 may be provided. The supports 110 may be disposed to be spaced apart from each other. Therefore, an installation space 120 may be formed between the supports 110. The installation space 120 refers to a space that is formed by the supports 110. Since the first embodiment includes two supports 110, the space between the supports 110 may become the installation space 120.

The photovoltaic power generation unit 200 is disposed in a form that closes the installation space 120. For example, the photovoltaic power generation unit 200 may be disposed in the length direction of the supports 110 as illustrated in Fig. 2. The photovoltaic power generation unit 200 is formed to have the same structure as described above with reference to Fig. 1. Therefore, when photovoltaic power generation units 200 are disposed in the length direction, all the photovoltaic power generation units 200 may generate energy.

That is to say, when sunlight radiates from the top to the bottom, a photovoltaic power generation unit 200 to which sunlight radiates first generates energy using sunlight. Sunlight permeates due to the transparency of the plate 210, the space between particles 220, etc., and sunlight may radiate to a photovoltaic power generation unit 200 located thereunder. Therefore, although not illustrated in Fig. 2, since the present disclosure may dispose photovoltaic power generation units 200 in a stack structure, energy may be generated with high efficiency within a small space.

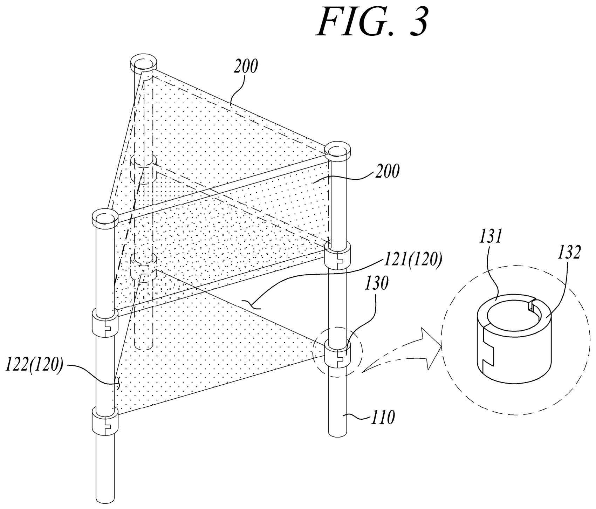

Fig. 3 illustrates a three-dimensional foldable photovoltaic module according to a second embodiment of the present disclosure.

According to the second embodiment, the three-dimensional foldable photovoltaic module may include a frame unit 100 and a photovoltaic power generation unit 200.

The frame unit 100 may include three supports 110. The three supports 110 may be formed to be disposed near the corners of a triangle. Therefore, some parts of an installation space 120 may have a triangular shape. In other words, the supports 110 may be disposed to form the lines of a figure with a specific shape. Therefore, the installation space 120 may be formed on the surface of the figure of a specific shape by the supports 110.

The installation space 120 may include a first installation space 121 and a second installation space 122.

The first installation space 121 may refer to a space that is formed between the supports 110. Therefore, the first installation space 121 may be formed in the shape of a triangle.

The second installation space 122 may refer to a side space between two supports 110. Therefore, the second installation space 122 may be a space that has a rectangular shape with upper and lower ends open.

Plates 210 of the photovoltaic power generation unit 200 may be formed in correspondence to the first installation space 121 and the second installation space 122. Therefore, the photovoltaic power generation unit 200 may be stably supported. Since the photovoltaic power generation unit 200 is similar to that described above with reference to Fig. 1, it may transmit sunlight. Therefore, the present disclosure may generate energy by efficiently using spaces. Namely, even when the photovoltaic power generation unit 200 is disposed in a vertical direction unlike the conventional art, photovoltaic power generation may be performed.

The photovoltaic power generation unit 200 may be connected to the supports 110 by movable connectors 130.

The movable connectors 130 may be positioned between the supports 110 and the photovoltaic power generation unit 200, and may firmly connect the photovoltaic power generation unit 200 to the supports 110 or may be loosely connect the photovoltaic power generation unit 200 to the supports 110 so that the photovoltaic power generation unit 200 may be slidably moved along the supports 110. The movable connector 130 may include a first fixing member 131 and a second fixing member 132.

The first fixing member 131 and the second fixing member 132 may each be formed in a semicircular shape. Therefore, the first fixing member 131 and the second fixing member 132 may be formed in a shape that surrounds the circumference of the support 110. Portions of the first fixing member 131 and the second fixing member 132 may overlap each other. Other portions of the first fixing member 131 and the second fixing member 132 may be hinge-connected to each other.

For example, the first fixing member 131 is formed with a protrusion, and the second fixing member 132 is formed with a groove in which the protrusion of the first fixing member 131 is to be disposed. Therefore, the first fixing member 131 is formed with a portion that overlaps the second fixing member 132. Due to the length (depth) of the overlapping portion, the movable connector 130 may be firmly or loosely connected to the support 110.

That is to say, as the overlapping areas of the first fixing member 131 and the second fixing member 132 are in large contact and are fixed, the first fixing member 131 and the second fixing member 132 strongly press the support 110, and thus, the photovoltaic power generation unit 200 does not slide and is fixed to the support 110. Otherwise, since the first fixing member 131 and the second fixing member 132 may slide on the support 110, the photovoltaic power generation unit 200 may be slidably moved.

The protrusion and the groove of the first fixing member 131 and the second fixing member 132 may be engaged with each other in any way as long as a position is fixed. For example, the protrusion of the first fixing member 131 may be formed with a depression on the outside thereof, and the groove of the second fixing member 132 may be formed with a prominence so that the depression and the prominence are coupled to each other (into a concave-convex structure). Alternatively, the protrusion of the first fixing member 131 may be a buckle, and the groove of the second fixing member 132 may be a receptacle that receives the buckle. In other words, as long as the first fixing member 131 and the second fixing member 132 differ only in a degree to which they are fixed to the support 110 depending on the overlapping degree of the protrusion and the groove, they may be structured in any ways while not causing a substantial problem.

The photovoltaic power generation unit 200 may be fixed to the support 110 through a fastener (not numbered). The fastener fastens the photovoltaic power generation unit 200 that is disposed in the second installation space 121 and does not require sliding movement. Namely, the fastener connects and fastens the photovoltaic power generation unit 200 disposed on the side surface in Fig. 3 and the support 110.

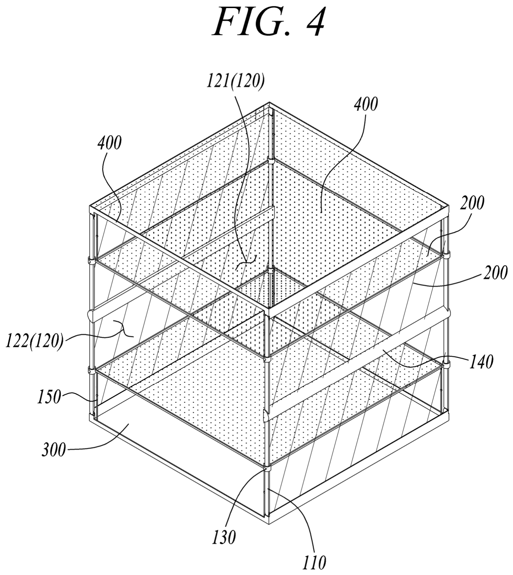

Fig. 4 illustrates a three-dimensional foldable photovoltaic module according to a third embodiment of the present disclosure.

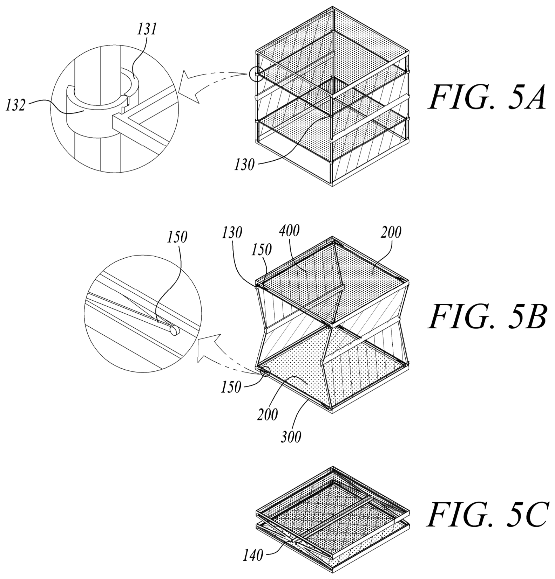

Fig. 5 sequentially illustrates the folding process of the three-dimensional foldable photovoltaic module according to the third embodiment of the present disclosure.

Hereinbelow, photovoltaic power generation units 200 will be indicated by diagonal lines and dotted lines. This is to enable the photovoltaic power generation units 200 to be identified and distinguished. It is to be noted that the photovoltaic power generation units 200 are not different and are the same as the photovoltaic power generation unit 200 described above with reference to Fig. 1.

According to the third embodiment, the three-dimensional foldable photovoltaic module includes a frame unit 100 (including components 110 and 120), photovoltaic power generation units 200, and a reflection unit 300.

The frame unit 100 may include four supports 110. The supports 110 may be disposed at corners of a rectangle.

The supports 110 may form a skeleton, and an installation space 120 may be formed between the supports 110.

The installation space 120 may mean the space between the four supports 110 or the space between two supports 110. Therefore, the installation space 120 may include a first installation space 121 and a second installation space 122.

Folding units 140 may be formed on the supports 110. The role of the folding units 140 is similar to that described above with reference to Fig. 3. Therefore, the supports 110 may be folded with respect to the folding units 140. It is preferable that the folding units 140 be formed at symmetrical positions.

That is to say, as illustrated in Fig. 4, a folding unit 140 may be connected in a form that connects two supports 110, and a folding unit 140 may be connected in a form that connects the remaining two supports 110 that are not connected by the folding unit 140. Therefore, in the present disclosure, the supports 110 may be folded into a symmetrical shape.

As illustrated in (b) of Fig. 5, since parts where the folding parts 140 are formed are folded, and the other parts where the folding parts 140 are not formed are fixed, when the folding units 140 are operated and folded, the folding units 140 may be moved so that the distance between the folding units 140 decreases. Therefore, it is preferable that the folding units 140 be formed in symmetrical shapes.

In other words, one of two folding units 140 is formed to have a semicircular cross-section, and the other is formed to have a semicircular cross-section of a different shape. Therefore, when the folding units 140 are operated and the supports 110 are completely folded, the respective folding units 140 are in contact with each other to form a circular cross-section.

The photovoltaic power generation units 200 are disposed in the installation space 120 (the first installation space 121 and the second installation space 122). It is preferable that the photovoltaic power generation units 200 be disposed in the first installation space 121, which is the installation space 120 formed between four supports 110, and the second installation space 122, which is the installation space 120 formed between two supports 110.

Therefore, the photovoltaic power generation units 200 may be disposed in the length direction of the supports 110 so that they may receive sunlight in a vertical direction or may receive sunlight from the sides.

The photovoltaic power generation unit 200 that is disposed while closing the first installation space 121 may be connected to the supports 110 through movable connectors 130. The movable connector 130 may include a first fixing member 131 and a second fixing member 132 as described above with reference to Fig. 3. Accordingly, the photovoltaic power generation unit 200 may be fixed to the supports 110 or may be slidably moved on the supports 110.

The photovoltaic power generation unit 200 that is disposed in the second installation space 122 may be fixed to the supports 110 through fasteners (not numbered). Unlike the movable connector 130, the fastener may stably fasten the photovoltaic power generation unit 200 to the support 110.

A guide unit 150 and the movable connector 130 may be connected.

The guide unit 150 may be fixed to the support 110 on one end thereof, and may be connected to the movable connector 130 at the other end thereof. The guide unit 150 may be folded with respect to the middle portion thereof similarly to the folding unit 140. Therefore, the guide unit 150 may allow the movable connector 130 to be moved relative to the support 110 only to the extent of the length of the guide unit 150.

The guide unit 150 may assist the movement of the movable connector 130. Therefore, the photovoltaic power generation unit 200 may be moved only to a set position relative to the support 110, and at the same time, when the movable connector 130 loosely fixes the support 110, the photovoltaic power generation unit 200 may be moved on the support 110 along a straight line.

The reflection unit 300 may be disposed at the bottom of the frame unit 100 (the bottoms of the supports 110). The reflection unit 300 serves to reflect sunlight when sunlight radiates. Therefore, the reflection unit 300 may increase photovoltaic power generation efficiency. Namely, the reflection unit 300 may improve the efficiency of photovoltaic power generation by reflecting sunlight having passed through the photovoltaic power generation unit 200 and moving sunlight back to the photovoltaic power generation unit 200.

An incidence unit 400 may be disposed on the frame unit 100 (on the supports 110). The incidence unit 400 may be a plate onto which sunlight is incident. The incidence unit 400 may be the photovoltaic power generation unit 200 itself, or may be a flat solid plate 210 through which sunlight may pass.

The three-dimensional foldable photovoltaic module may be folded as illustrated in Fig. 5.

First, as can be seen from (a) of Fig. 5, by shortening the length of portions where the first fixing member 131 and the second fixing member 132 of the movable connector 130 overlap each other, the mobility of the movable connector 130 is secured.

Then, as can be seen from (b) of Fig. 5, by moving each of the movable connectors 130, the photovoltaic power generation unit 200 is moved to be adjacent to the reflection unit 300 and the incidence unit 400. At this time, the guide unit 150 may be folded.

Thereafter, as can be seen from (c) of Fig. 5, the three-dimensional foldable photovoltaic module may be folded with respect to the folding unit 140. Then, the three-dimensional foldable photovoltaic module of the present disclosure may be changed from a large volume hexahedron to a small volume hexahedron. The folding units 140 may be in contact with each other.

When it is necessary to return the folded three-dimensional foldable photovoltaic module of the present disclosure to its original shape, the three-dimensional foldable photovoltaic module may be operated in reverse order of (a), (b) and (c) of Fig. 5.

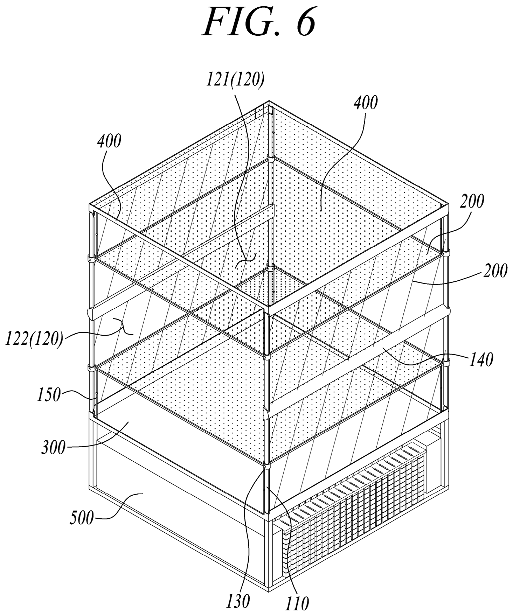

Fig. 6 illustrates a three-dimensional foldable photovoltaic module according to a fourth embodiment of the present disclosure.

According to the fourth embodiment, a battery 500 may be disposed in the three-dimensional foldable photovoltaic module. That is to say, as illustrated in Fig. 6, a support plate 210 may be fixed below a reflection unit 300 to be spaced apart from supports 110. The battery 500 may be disposed between the reflection unit 300 and the support plate 210. Therefore, energy generated by a photovoltaic power generation unit 200 may be transmitted to and charged in the battery 500.

Although not illustrated, the three-dimensional foldable photovoltaic module according to the above-described embodiments, including the fourth embodiment, may be connected to various devices to enable the devices to operate.

For example, the three-dimensional foldable photovoltaic module described above may be connected to lighting (various lighting including LED lighting). Therefore, when the three-dimensional foldable photovoltaic module performs photovoltaic power generation, the lighting may be operated.

For example, the three-dimensional foldable photovoltaic module described above may be connected to an inverter. Therefore, when the three-dimensional foldable photovoltaic module performs photovoltaic power generation, direct current may be converted into alternating current by the inverter. The current converted by the inverter may be connected additionally to various devices.

For example, the three-dimensional foldable photovoltaic module described above may be connected to an air conditioner. Therefore, when the three-dimensional foldable photovoltaic module performs photovoltaic power generation, the air conditioner may be operated to supply cool air.

In addition, a plurality of three-dimensional foldable photovoltaic modules may be provided and connected to different devices, respectively. The respective different devices may be operated through one interface. For example, the present disclosure may operate various devices such as a lighting, an inverter, an air conditioner and so on using terminals having a single interface.

Furthermore, a device may be disposed in a space that is formed by a frame unit 100 and the photovoltaic power generation unit 200. For example, the frame unit 100 may form a rectangular solid, and the photovoltaic power generation unit 200 may be disposed on the surface of the rectangular solid. Devices may be located inside the rectangular solid. In other words, four supports 110 may be disposed vertically to be spaced apart from each other, and four supports may be disposed horizontally to be spaced apart from each other. The photovoltaic power generation unit 200 may be disposed in a form that closes the surface, and devices may be disposed within the space.

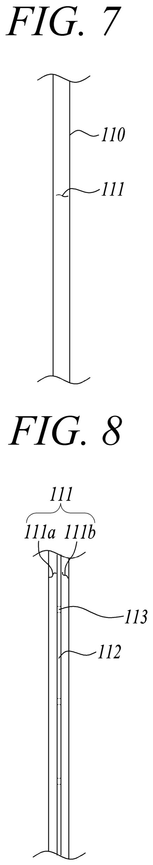

Fig. 7 illustrates a cross-section of a support according to an embodiment of the present disclosure.

The support 110 of the present disclosure may have a space 111 formed therein. The space 111 may be a line space 111 where a line through which electric energy flows is located. The line space 111 may be formed so that line spaces 111 communicate with each other when supports 110 are brought into contact with each other.

Alternatively, the line space 111 may be formed to communicate with the movable connector 130 (see Fig. 4) described above. Therefore, a line, through which energy (electrical energy) generated by the photovoltaic power generation unit 200 may be moved, may be disposed. Accordingly, in the present disclosure, energy generated using sunlight at various locations may be transmitted to the battery 500. The support 110 described above with reference to Fig. 6 may be the support 110 of the three-dimensional foldable photovoltaic module according to the first to fourth embodiments described above.

Fig. 8 illustrates a cross-section of a support according to another embodiment of the present disclosure.

A support 110 according to the present embodiment may have a line space 111 formed therein as described above, but the line space 111 may be divided into a first line space 111a and a second line space 111b.

A partition wall 112 is disposed in the support 110, and the line space 111 may be divided into the first line space 111a and the second line space 111b by the partition wall 112. Therefore, lines with the positive (+) polarity and the negative (-) polarity may be separately disposed while not being connected to each other. The partition wall 112 may be formed with a communication hole 113. Therefore, the first line space 111a and the second line space 111b may communicate with each other through the communication hole 113. Therefore, the support 110 according to the present embodiment may allow lines to be organized easily.

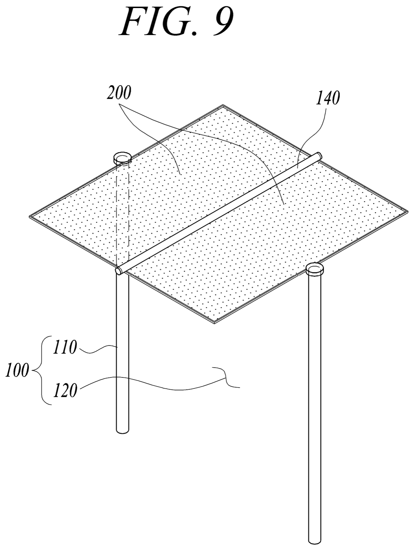

Fig. 9 illustrates a three-dimensional foldable photovoltaic module according to a fifth embodiment of the present disclosure.

The three-dimensional foldable photovoltaic module according to the fifth embodiment is an improvement of the three-dimensional foldable photovoltaic module according to the first embodiment, and includes a frame unit 100 and a photovoltaic power generation unit 200. The frame unit 100 includes a support 110 and an installation space 120 similar to the three-dimensional foldable photovoltaic module according to the first embodiment.

A folding unit 140 may be disposed at the middle of the photovoltaic power generation unit 200. The folding unit 140 may allow the photovoltaic power generation unit 200 to be folded with respect to the folding unit 140. Therefore, as the occasion demands, the photovoltaic power generation unit 200 may be disposed by being folded with respect to the folding unit 140.

Fig. 9 illustrates that one folding unit 140 is disposed in the photovoltaic power generation unit 200. However, the present disclosure is not limited thereto, and a plurality of folding units 140 may be disposed. Namely, folding units 140 may be disposed in various numbers such as two, three or four, and accordingly, the photovoltaic power generation unit 200 may be folded into various shapes. For example, the photovoltaic power generation unit 200 may be disposed to have a cross-section such as 'V' or 'W' due to the presence of a plurality of folding units 140.

Therefore, in the present disclosure, since the photovoltaic power generation unit 200 is disposed by being folded with respect to the folding unit 140, larger energy may be generated compared to space.

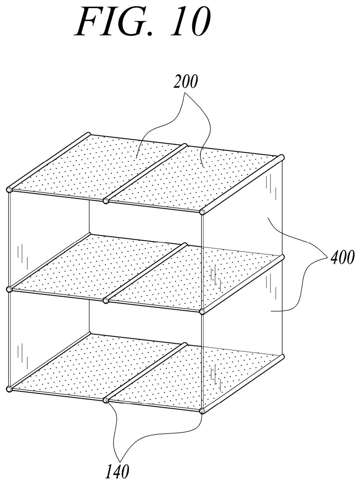

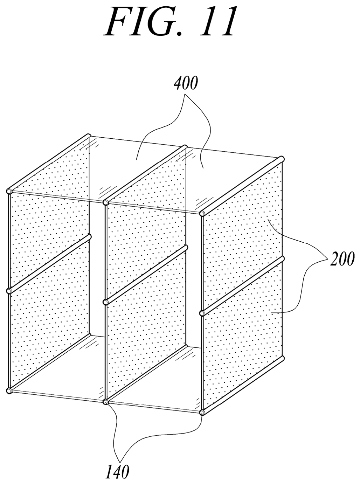

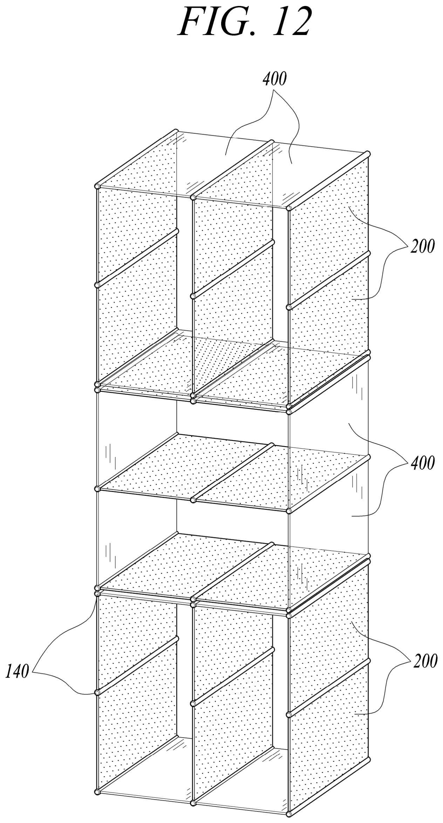

Fig. 10 illustrates a three-dimensional foldable photovoltaic module according to a sixth embodiment of the present disclosure, Fig. 11 illustrates a three-dimensional foldable photovoltaic module according to a seventh embodiment of the present disclosure, and Fig. 12 shows an example in which the three-dimensional foldable photovoltaic modules of Fig. 10 and Fig. 11 are disposed.

The three-dimensional foldable photovoltaic modules according to the sixth and seventh embodiments illustrated in Fig. 10 and Fig. 11 are modified embodiments of the third embodiment, in which a folding unit may be disposed in a photovoltaic power generation unit 200 as illustrated in Fig. 9.

Each of the sixth and seventh embodiments may include a photovoltaic power generation unit 200, an incidence unit 400, and a folding unit 140. That is to say, after a folding part 140 is disposed in the photovoltaic power generation unit 200 and a folding unit 140 is also disposed in the incidence unit 400, a folding part 140 may be disposed between the photovoltaic power generation unit 200 and the incidence unit 400.

According to the disposition of the folding units 140, three-dimensional foldable photovoltaic modules may be formed as illustrated in Fig. 10 and Fig. 11. In other words, as illustrated in Fig. 10, photovoltaic power generation units 200 may be disposed to be spaced apart in the vertical direction based on the drawing, and incidence units 400 may be disposed on a side. Alternatively, the photovoltaic power generation units 200 may be rotated clockwise so that the incidence units 400 are disposed on the top.

Such three-dimensional foldable photovoltaic modules may be disposed in an overlapping manner as illustrated in Fig. 12. Namely, another three-dimensional foldable photovoltaic module may be disposed on top of a three-dimensional foldable photovoltaic module.

Alternatively, although not illustrated, three-dimensional foldable photovoltaic modules may be disposed in close contact with each other in the horizontal direction. Alternatively, although not illustrated, three-dimensional foldable photovoltaic modules may be disposed in a variety of shapes, such as a cube, by being overlapped and closely disposed. In this way, in the present disclosure, due to the characteristics of the photovoltaic power generation unit 200, a three-dimensional foldable photovoltaic module may be disposed within a limited space, thereby maximizing energy generation efficiency. In addition, unlike the conventional art, the three-dimensional foldable photovoltaic module may be used regardless of location.

Although not illustrated, the three-dimensional foldable photovoltaic modules according to the fifth, sixth and seventh embodiments may be disposed to be connected to various devices as described above.

In addition, the three-dimensional foldable photovoltaic modules according to the fifth, sixth and seventh embodiments may be operated using the same interface. For example, in the three-dimensional foldable photovoltaic modules according to the fifth, sixth and seventh embodiments, devices respectively connected to each other using terminals having a single interface may be operated.

Although the embodiments of the present disclosure have been described, those of ordinary skill in the art will be able to modify and change the present disclosure in various ways by adding, changing or deleting components within the scope that does not depart from the spirit of the present disclosure described in the claims, and this will also be considered to be included within the scope of the rights of the present disclosure.

## Claims

1. A three-dimensional foldable photovoltaic module comprising:
a frame unit formed with an installation space; and
a photovoltaic power generation unit disposed in a form that closes the installation space, and generating energy using sunlight supplied through the installation space.

2. The three-dimensional foldable photovoltaic module according to claim 1, wherein the frame unit is formed as supports disposed in a horizontal or vertical direction are connected.

3. The three-dimensional foldable photovoltaic module according to claim 2, wherein
at least two supports are disposed in a vertical direction to form an installation space therebetween, and
the photovoltaic power generation unit is disposed in the installation space and is connected to the supports.

4. The three-dimensional foldable photovoltaic module according to claim 3, wherein
four supports are disposed to be spaced apart from each other, and
the photovoltaic power generation unit is disposed to be in contact with at least two of the four supports and to close the installation space.

5. The three-dimensional foldable photovoltaic module according to claim 3, wherein folding units are formed on one sides of the supports to allow the supports to be folded.

6. The three-dimensional foldable photovoltaic module according to claim 5, wherein the folding units are formed in symmetrical shapes at symmetrical positions on the supports.

7. The three-dimensional foldable photovoltaic module according to claim 2, wherein the photovoltaic power generation unit comprises a plate on which circuit patterns are formed and particles that are disposed on the plate and generate energy when sunlight radiates.

8. The three-dimensional foldable photovoltaic module according to claim 7, wherein the plate is able to be fixed to the supports and is connected to the supports through movable connectors capable of sliding movement.

9. The three-dimensional foldable photovoltaic module according to claim 8, wherein
the movable connector includes a first fixing member that covers the support and a second fixing member that covers the support at a position symmetrical to the position of the first fixing member, and
the first fixing member and the second fixing member are fixed to or released from the support by being moved close to or away from the surface of the support to be slidably movable.

10. The three-dimensional foldable photovoltaic module according to claim 2, wherein the inside of the support is formed with a line space.

11. The three-dimensional foldable photovoltaic module according to claim 1, wherein a reflection unit that reflects sunlight is disposed in the frame unit.

12. The three-dimensional foldable photovoltaic module according to claim 2, wherein a folding unit is disposed in the photovoltaic power generation unit to allow the photovoltaic power generation unit to be folded.

13. The three-dimensional foldable photovoltaic module according to claim 12, wherein
the three-dimensional foldable photovoltaic module comprises an incidence unit,
photovoltaic power generation units are disposed to be spaced apart from each other, and
the incidence unit is disposed in a form that closes a space through which the photovoltaic power generation units are spaced apart from each other.

14. The three-dimensional foldable photovoltaic module according to claim 13, wherein a folding unit is disposed at a location where the photovoltaic power generation unit and the incidence unit come into contact.

15. The three-dimensional foldable photovoltaic module according to claim 2, wherein
the support forms the line of a figure of a set shape by being disposed in at least one direction of a horizontal direction and a vertical direction, and
the photovoltaic power generation unit is disposed on the surface of the figure of the set shape.
